# EUROPEAN PATENT APPLICATION

(11) **EP 4 598 178 A1**
(43) Date of publication of application: **06.08.2025**
(21) Application number: 22960421.0
(22) Date of filing: 30.09.2022
(51) Int. Cl.: H04W 72/04

(54) **BEAM APPLICATION METHOD AND APPARATUS, STORAGE MEDIUM, AND CHIP**

(71) Applicant: Beijing Xiaomi Mobile Software Co., Ltd., Beijing 100085 (CN)
(72) Inventor: LIU, Min, Beijing 100085 (CN)
(74) Representative: Dehns Germany Partnerschaft mbB
(86) International application number: PCT/CN2022/123594
(87) International publication number: WO 2024/065813

(57) **Abstract**

The present disclosure relates to a beam application method and apparatus, a storage medium, and a chip. The method comprises: a relay device determining a target beam in response to having received a first message, which is sent by a network device; determining beam time-domain information, which corresponds to the target beam; and applying the target beam within an application time which is determined according to the beam time-domain information, wherein the target beam is a beam applied to a transmission link between the relay device and a terminal device, and the target beam comprises one or more beams, or one or more beam groups. In this way, a relay device can flexibly use a target beam according to beam time-domain information, thereby more effectively improving coverage performance by means of the target beam.

## Description

### TECHNICAL FIELD

The present disclosure relates to the field of communication technology, and in particular, to method and device for beam application, a storage medium and a chip.

### BACKGROUND

In order to improve the coverage of the wireless communication system, a repeater device can be added to the wireless communication system, and repeater transmission can be performed through the repeater device to expand the coverage of the wireless communication system. For example, a wireless communication system that supports repeater transmission may include nodes of three types of devices: network device, repeater device, and terminal device. The link between the network device and the repeater device may include a backhaul link, and the link between the repeater device and the terminal device may include an access link. In addition, the link between the network device and the repeater device may also include a control link.

Similarly, in order to improve the coverage performance of the wireless communication system, 3GPP (3rd Generation Partnership Project) defines beamforming technology, which can control the direction of the transmitted signal of the antenna to form a directional beam, thereby improving the coverage capability of the wireless communication system.

In related art, the repeater device is not flexible enough in using the beamforming technology, which will result in the repeater device being unable to effectively improve the coverage performance.

### SUMMARY

In order to overcome the above problems existing in the related art, the present disclosure provides method and device for beam application, a storage medium and a chip.

According to a first aspect of the present disclosure, there is provided a beam application method, performed by a repeater device, including:
in response to receiving a first message sent by a network device, determining a target beam; where the target beam is a beam applied to a transmission link between the repeater device and a terminal device, and the target beam includes one or more beams, or one or more beam groups;
determining beam's time domain information corresponding to the target beam; and
applying the target beam within application time determined according to the beam's time domain information.

In some embodiments, the beam's time domain information includes one or more of:
beam's start time information corresponding to the target beam;
beam's end time information corresponding to the target beam;
beam's application duration information corresponding to the target beam; and
beam's period information corresponding to the target beam.

In some embodiments, in a case where the beam's time domain information includes the beam's application duration information, the beam's application duration information includes one or more of:
an application time range for applying the target beam;
an application duration for applying the target beam; and
a time domain resource allocation information TDRA index value for applying the target beam.

In some embodiments, in a case where the beam's time domain information includes the beam's start time information corresponding to the target beam, applying the target beam within the application time determined according to the beam's time domain information includes:
determining first time according to the beam's start time information; and
applying the target beam when current time of the repeater device reaches the first time.

In some embodiments, in a case where the beam's time domain information includes the beam's application duration information and there are multiple target beams, the beam's application duration information includes a first duration corresponding to each target beam; applying the target beam within the application time determined according to the beam's time domain information includes:
applying the target beams to the repeater device in sequence according to the first duration and a preset order.

In some embodiments, in a case where the beam's time domain information includes the beam's application duration information and there are multiple target beams, the beam's application duration information includes a total duration of the multiple target beams; applying the target beam within the application time determined according to the beam's time domain information includes:
determine a second duration of each target beam according to the total duration and a number of the target beams; and
applying the target beams to the repeater device in sequence according to the second duration and a preset order.

In some embodiments, in a case where the beam's time domain information includes the beam's period information, applying the target beam within the application time determined according to the beam's time domain information includes:
determining a target period according to the beam's period information; and
periodically applying the target beam to the repeater device according to the target period.

In some embodiments, determining the beam's time domain information corresponding to the target beam includes:
in a case where the first message includes the beam's time domain information, obtaining the beam's time domain information in the first message.

In some embodiments, determining the beam's time domain information corresponding to the target beam includes:
in a case where the first message does not include the beam's time domain information, if receiving a second message sent by the network device, determining the beam's time domain information according to the second message.

In some embodiments, the second message includes one or more of a second radio resource control RRC message, a second media access control control element MAC CE, second downlink control information DCI, and second repeater control information SCI.

According to a second aspect of the present disclosure, there is provided a beam application method, performed by a network device, including:
sending a first message to a repeater device; where the first message is configured to instruct the repeater device to determine a target beam and beam's time domain information corresponding to the target beam, and apply the target beam within application time determined according to the beam's time domain information; the target beam is a beam applied to a transmission link between the repeater device and a terminal device, and the target beam includes one or more beams, or one or more beam groups.

In some embodiments, the beam's time domain information includes one or more of:
beam's start time information corresponding to the target beam;
beam's end time information corresponding to the target beam;
beam's application duration information corresponding to the target beam; and
beam's period information corresponding to the target beam.

In some embodiments, in a case where the beam's time domain information includes the beam's application duration information, the beam's application duration information includes one or more of:
an application time range for applying the target beam;
an application duration for applying the target beam; and
a time domain resource allocation information TDRA index value for applying the target beam.

In some embodiments, the first message includes the beam's time domain information.

In some embodiments, the method further includes:
sending a second message to the repeater device, where the second message includes the beam's time domain information.

In some embodiments, the second message includes one or more of a second radio resource control RRC message, a second media access control control element MAC CE, second downlink control information DCI and second repeater control information SCI.

According to a third aspect of the present disclosure, there is provided a beam application device, applied to a repeater device, including:
a first determining module, configured to determine a target beam in response to receiving a first message sent by a network device; where the target beam is a beam applied to a transmission link between the repeater device and a terminal device, and the target beam includes one or more beams, or one or more beam groups;
a second determining module, configured to determine beam's time domain information corresponding to the target beam; and
an application module, configured to apply the target beam within application time determined according to the beam's time domain information.

In some embodiments, the beam's time domain information includes one or more of:
beam's start time information corresponding to the target beam;
beam's end time information corresponding to the target beam;
beam's application duration information corresponding to the target beam; and
beam's period information corresponding to the target beam.

In some embodiments, in a case where the beam's time domain information includes the beam's application duration information, the beam's application duration information includes one or more of:
an application time range for applying the target beam;
an application duration for applying the target beam; and
a time domain resource allocation information TDRA index value for applying the target beam.

In some embodiments, in a case where the beam's time domain information includes the beam's start time information corresponding to the target beam, the application module is configured to determine first time according to the beam's start time information; and apply the target beam when current time of the repeater device reaches the first time.

In some embodiments, in a case where the beam's time domain information includes the beam's application duration information and there are multiple target beams, the beam's application duration information includes a first duration corresponding to each target beam; the application module is configured to apply the target beams to the repeater device in sequence according to the first duration and a preset order.

In some embodiments, in a case where the beam's time domain information includes the beam's application duration information and there are multiple target beams, the beam's application duration information includes a total duration of the multiple target beams; the application module is configured to determine a second duration of each target beam according to the total duration and a number of the target beams and apply the target beams to the repeater device in sequence according to the second duration and a preset order.

In some embodiments, in a case where the beam's time domain information includes the beam's period information, the application module is configured to determine a target period according to the beam's period information and periodically apply the target beam to the repeater device according to the target period.

In some embodiments, the second determining module is configured to obtain the beam's time domain information in the first message in a case where the first message includes the beam's time domain information.

In some embodiments, the second determining module is configured to determine the beam's time domain information according to a second message if receiving the second message sent by the network device in a case where the first message does not include the beam's time domain information.

In some embodiments, the second message includes one or more of a second radio resource control RRC message, a second media access control control element MAC CE, second downlink control information DCI, and second repeater control information SCI.

According to a fourth aspect of the present disclosure, there is provided a beam application device, applied to a network device, including:
a first sending module, configured to send a first message to a repeater device; where the first message is configured to instruct the repeater device to determine a target beam and beam's time domain information corresponding to the target beam, and apply the target beam within application time determined according to the beam's time domain information; the target beam is a beam applied to a transmission link between the repeater device and a terminal device, and the target beam includes one or more beams, or one or more beam groups.

In some embodiments, the beam's time domain information includes one or more of:
beam's start time information corresponding to the target beam;
beam's end time information corresponding to the target beam;
beam's application duration information corresponding to the target beam; and
beam's period information corresponding to the target beam.

In some embodiments, in a case where the beam's time domain information includes the beam's application duration information, the beam's application duration information includes one or more of:
an application time range for applying the target beam;
an application duration for applying the target beam; and
a time domain resource allocation information TDRA index value for applying the target beam.

In some embodiments, the first message includes the beam's time domain information.

In some embodiments, the first sending module is configured to send a second message to the repeater device, where the second message includes the beam's time domain information.

In some embodiments, the second message includes one or more of a second radio resource control RRC message, a second media access control control element MAC CE, second downlink control information DCI and second repeater control information SCI.

According to a fifth aspect of the present disclosure, there is provided a beam application device, including:
a processor; and
a memory for storing processor executable instructions;
where the processor is configured to execute steps of the method according to the first aspect of the present disclosure.

According to a sixth aspect of the present disclosure, there is provided a beam application device, including:
a processor; and
a memory for storing processor executable instructions;
where the processor is configured to execute steps of the method according to the second aspect of the present disclosure.

According to a seventh aspect of the present disclosure, there is provided a computer-readable storage medium having computer program instructions stored thereon, wherein when the computer program instructions are executed by a processor, steps of the method according to the first aspect of the present disclosure are implemented.

According to an eighth aspect of the present disclosure, there is provided a computer-readable storage medium having computer program instructions stored thereon, wherein when the computer program instructions are executed by a processor, steps of the method according to the second aspect of the present disclosure are implemented.

According to a ninth aspect of the present disclosure, there is provided a chip, including a processor and an interface; the processor is configured to read instructions to execute steps of the method according to the first aspect of the present disclosure.

According to a tenth aspect of the present disclosure, there is provided a chip, including a processor and an interface; the processor is configured to read instructions to execute steps of the method according to the second aspect of the present disclosure.

The technical solution provided by the embodiment of the present disclosure may include the following beneficial effects: the repeater device determines the target beam in response to receiving the first message sent by the network device, and determines the beam's time domain information corresponding to the target beam, and applies the target beam within the application time determined according to the beam's time domain information. The target beam is a beam applied to the transmission link between the repeater device and the terminal device, and the target beam includes one or more beams, or one or more beam groups. In this way, the repeater device can flexibly apply the target beam according to the beam's time domain information, so as to more effectively improve the coverage performance through the target beam.

It should be understood that the above general description and the detailed description below are only examples and explanatory, and cannot limit the present disclosure.

### BRIEF DESCRIPTION OF THE DRAWINGS

The drawings herein are incorporated into and constitute a part of the description, illustrate embodiments consistent with the present disclosure, and are used together with the description to explain the principles of the present disclosure.
FIG. 1 is a schematic diagram of a communication system according to an example embodiment.
FIG. 2 is a schematic diagram of another communication system according to an example embodiment.
FIG. 3 is a flow chart of a beam application method according to an example embodiment.
FIG. 4 is a flow chart of a beam application method according to an example embodiment.
FIG. 5 is a flow chart of a beam application method according to an example embodiment.
FIG. 6 is a flow chart of a beam application method according to an example embodiment.
FIG. 7 is a block diagram of a beam application device according to an example embodiment.
FIG. 8 is a block diagram of a beam application device according to an example embodiment.
FIG. 9 is a block diagram of a beam application device according to an example embodiment.

### DETAILED DESCRIPTION

Here, example embodiments will be described in detail, and examples thereof are shown in the accompanying drawings. When the following description refers to the drawings, unless otherwise indicated, the same numbers in different drawings represent the same or similar elements. The embodiments described in the following example embodiments do not represent all embodiments consistent with the present disclosure. Instead, they are only examples of devices and methods consistent with some aspects of the present disclosure as detailed in the attached claims.

It should be noted that all actions to obtain signals, information or data in the present disclosure are carried out under the premise of complying with the corresponding data protection laws and policies of the country of residence and with the authorization given by the owner of the corresponding device.

In the description of the present disclosure, the terms used, such as "first", "second", etc., are used to distinguish similar objects, and do not have to be understood as a specific order or sequence. In addition, in the description of the reference drawings, the same mark in different drawings represents the same element unless otherwise stated.

In the description of the present disclosure, unless otherwise specified, "multiple" means two or more than two, and other quantifiers are similar; "at least one item", "one or more items" or similar expressions refer to any combination of these items, including any combination of single item or plural items. For example, at least one item can represent any number; for another example, one or more items of a, b and c can represent: a, b, c, a-b, a-c, b-c, or a-b-c, where a, b, c can be single or multiple; "and/or" is a kind of association relationship that describes the associated objects, indicating that there can be three relationships. For example, A and/or B can represent: A exists alone, A and B exist at the same time, and B exists alone, where A and B can be singular or plural.

Although the operations or steps are described in a specific order in the drawings in the embodiments of the present disclosure, it should not be understood as requiring the operations or steps to be performed in the preset order or serial order shown, or requiring the execution of all the operations or steps shown to obtain the desired results. In the embodiments of the present disclosure, these operations or steps can be performed in series; these operations or steps can also be performed in parallel; or some of these operations or steps can be performed.

The implementation environment of the embodiments of the present disclosure is first introduced below.

The technical solution of the embodiments of the present disclosure can be applied to various communication systems. The communication system may include one or more of a 4G (the 4th Generation) communication system, a 5G (the 5th Generation) communication system, and other future wireless communication systems (such as 6G). The communication system may also include one or more of a public land mobile network (PLMN) network, a device-to-device (D2D) communication system, a machine-to-machine (M2M) communication system, an Internet of Things (IoT) communication system, a vehicle-to-everything (V2X) communication system or other communication systems.

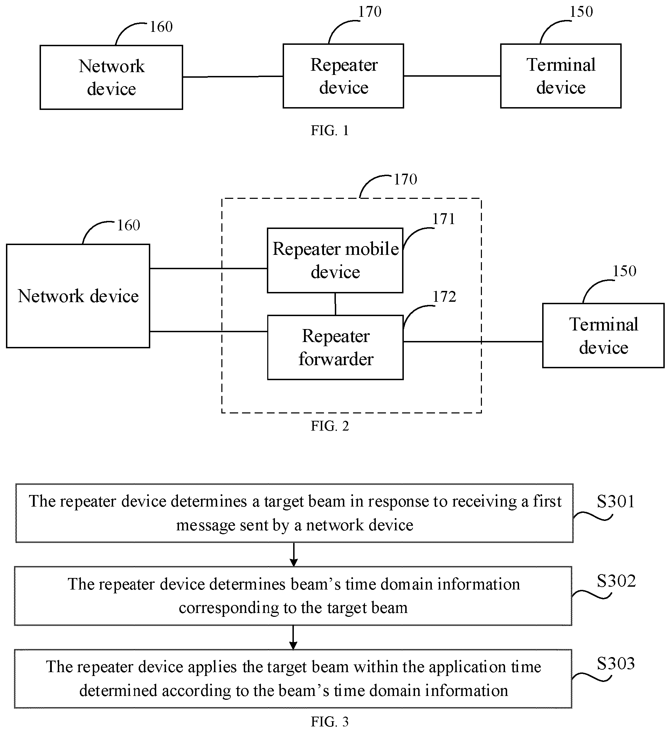

FIG. 1 is a schematic diagram of a communication system according to an example embodiment. As shown in FIG. 1, the communication system may include a terminal device 150, a network device 160 and a repeater device 170. The communication system may be configured to support 4G network access technology, such as Long Term Evolution (LTE) access technology, or 5G network access technology, such as New Radio Access Technology (New RAT), or other future wireless communication technologies. It should be noted that in the communication system, the number of terminal devices, network devices and repeater devices can be one or more. The number of terminal devices, network devices and repeater devices in the communication system shown in FIG. 1 is only an adaptive example, and the present disclosure does not limit this.

The network device 160 in FIG. 1 can be configured to support the access and communication of terminal devices. For example, the network device can be an evolutionary Node B (eNB or eNodeB) in LTE; the network device can also be the next generation Node B (gNB or gNodeB) in a 5G network; the network device can also be a wireless access network (NG Radio Access Network, NG-RAN) device in a 5G network; the network device can also be a base station, a broadband network gateway (BNG), an aggregation switch or a non-3GPP (3rd Generation Partnership Project) access device, etc. in a future evolved public land mobile network (PLMN). Alternatively, the network device in the embodiment of the present disclosure may include various forms of base stations, such as: macro base station, micro base station (also known as small stations), repeater station, access point, 5G base station or future base station, satellite, Transmitting and Receiving Point (TRP), Transmitting Point (TP), mobile switching center, and device to device (D2D), machine to machine (M2M), Internet of Things (Internet of Things, IoT), vehicle-to-everything (V2X) or other device that assumes the function of base station in communication, etc., which are not specifically limited in the embodiment of the present disclosure. For the convenience of description, in all embodiments of the present disclosure, the devices that provide wireless communication functions for terminal devices are collectively referred to as network devices or base stations.

The terminal device 150 in FIG. 1 can be an electronic device that provides voice or data connectivity. For example, the terminal device can also be called user equipment (UE), subscriber unit, mobile station, station, terminal, etc. For example, the terminal device may include a smart phone, a smart wearable device, a smart speaker, a smart tablet, a wireless modem, a wireless local loop (WLL) station, a PDA (Personal Digital Assistant), a CPE (Customer Premise Equipment), etc. With the development of wireless communication technology, devices that can access a communication system, communicate with network devices of a communication system, communicate with other objects through a communication system, or two or more devices that can communicate directly with each other can all be terminal devices in the embodiments of the present disclosure, such as terminals and cars in smart transportation, household devices in smart homes, power meter reading instruments, voltage monitoring instruments, environmental monitoring instruments in smart grids, video monitoring instruments in smart security networks, cash registers, etc. In the embodiments of the present disclosure, the terminal device can communicate with the network device. Multiple terminal devices can also communicate with each other. The terminal device can be statically fixed or mobile, and the present disclosure does not limit this.

The repeater device 170 in FIG. 1 can be configured to forward wireless signals between the network device 160 and the terminal device 150. For example, during downlink transmission, the repeater device can forward the downlink wireless signal transmitted by the network device and transmit the downlink wireless signal to the terminal device; during uplink transmission, the repeater device can forward the uplink wireless signal transmitted by the terminal device and transmit the uplink wireless signal to the network device. In some embodiments, the repeater device can be a repeater device that forwards wireless information based on the control command of the network device. For example, the repeater device can be a network controlled repeater (NCR).

FIG. 2 is a schematic diagram of another communication system according to an example embodiment. As shown in FIG. 2, the repeater device 170 in the communication system can be a network controlled repeater. The network controlled repeater can include a repeater mobile terminal (NCR-MT, Network Controlled Repeater Mobile Termination) and a repeater forwarder (NCR-Fwd, Network Controlled Repeater-Forwarding). The repeater mobile terminal can be configured to receive the control command sent by the network device and control the behavior of the repeater forwarder according to the control command, such as turning on and off the forwarding of wireless signals. It should be noted that the repeater mobile terminal and the repeater forwarder can be two hardware units or two software modules in the network controlled repeater, and the present disclosure does not limit this.

In some embodiments, in order to forward the wireless signal between the network device and the terminal device through the repeater device, multiple links can be set in the communication system. For example, the link between the repeater device and the network device can include a control link and a backhaul link, and the link between the repeater device and the terminal device can include an access link. The repeater mobile terminal of the repeater device can receive the control command sent by the network device through the control link, and control the behavior of the repeater forwarder according to the control command; the repeater forwarder can receive the downlink wireless signal sent by the network device through the backhaul link, and send the downlink wireless signal to the terminal device through the access link. The repeater forwarder can also receive the uplink wireless signal sent by the terminal device through the access link, and send the uplink wireless signal to the network device through the backhaul link, thereby realizing the repeater transmission of wireless signals.

In some embodiments, the above-mentioned repeater device may support beamforming technology. For example, the repeater device may apply a specific beam to forward the wireless signal according to the control of the network device. However, in the related art, the repeater device is not flexible enough in the way of applying the beam, especially it is impossible to effectively control the time domain information of the beam application, resulting in the repeater device being unable to improve the coverage performance more effectively.

In order to solve the above-mentioned problem, the present disclosure provides method and device for beam application, a storage medium and a chip.

FIG. 3 is a flowchart of a beam application method according to an example embodiment. The method can be applied to the repeater device in the above-mentioned communication system. As shown in FIG. 3, the method may include:

S301, the repeater device determines a target beam in response to receiving a first message sent by a network device.

The target beam is a beam applied to the transmission link between the repeater device and the terminal device. For example, the target beam may be a beam applied on the above-mentioned access link between the repeater device and the terminal device.

The target beam includes one or more beams, or one or more beam groups.

In some embodiments, the first message may be a message received by the repeater device through the control link.

In some embodiments, the first message may be a first radio resource control (RRC) message.

In some embodiments, the first message may include one or more beam identifiers. The repeater device may determine the target beam through the beam identifier, and the target beam includes one or more beams.

In other embodiments, the first message may include one or more beam group identifiers. The repeater device may determine the target beam through the beam group identifier, and the target beam includes one or more beam groups. It should be noted that a beam group may be composed of one or more beams in a preset order.

In other embodiments, the first message may also include a beam identifier and a beam group identifier. The repeater device may determine the target beam through the beam identifier and the beam group identifier, and the target beam includes one or more beams, and one or more beam groups.

In some other embodiments, the first message may include a reference signal, and the repeater device may determine the target beam through the reference signal.

It should be noted that the first message may also include frequency domain information corresponding to the target beam. The repeater device may determine a frequency band to which the target beam is applied through the frequency domain information, such as BWP (Bandwidth Part) information, CC (Carrier Component) information, etc., and the present disclosure does not limit this.

S302, the repeater device determines beam's time domain information corresponding to the target beam.

The methods in which the repeater device determines the beam's time domain information may include any one or more of the following:

Method 1, in a case where the beam's time domain information is included in the first message, the repeater device may obtain the beam's time domain information in the first message.

Method 2, in a case where the beam's time domain information is not included in the first message, if the repeater device receives a second message sent by the network device, the beam's time domain information may be determined according to the second message.

The second message may include the beam's time domain information corresponding to the target beam.

The second message may include one or more of a second radio resource control RRC message, a second media access control control element MAC CE, second downlink control information DCI, and second repeater control information SCI (Side Control Information).

It should be noted that the Side Control Information is control information sent by a network device to a repeater device, and SCI here may also be a signaling used by a network device to send control information to a repeater device, and the SCI may be understood as a specific DCI used by a repeater device.

Method 3: in a case where the repeater device does not receive the beam's time domain information sent by the network device, the repeater device may use the preset time domain information as the beam's time domain information corresponding to the target beam.

The preset time domain information may be any information pre-set by the repeater device. In some embodiments, the preset time domain information is agreed upon by a protocol.

The repeater device may determine that the repeater device does not received the beam's time domain information sent by the network device when any one or more of the following conditions are met:
Condition 1: The first message received by the repeater device does not include the beam's time domain information.
Condition 2: The first message received by the repeater device does not include the beam's time domain information, and the second message is not received.
Condition 3: Neither of the first message and the second message received by the repeater device include the beam's time domain information.
Condition 4: The first message or the second message received by the repeater device includes the beam's time domain information, but the beam's time domain information verification fails, resulting in the repeater device being unable to obtain the correct beam's time domain information. For example, the values of certain parameters in the beam's time domain information exceed the preset parameter value range, resulting in verification failure.

In this way, the repeater device can determine the above beam's time domain information by any of the above methods.

S303, the repeater device applies the target beam within the application time determined according to the beam's time domain information.

In some embodiments, the repeater device can send a wireless signal to the terminal device through the target beam within the application time. For example, the wireless signal received from the network device can be forwarded to the terminal device through the target beam.

In some embodiments, the repeater device can receive the wireless signal sent by the terminal device through the target beam within the application time. For example, the wireless signal sent by the terminal device received through the target beam can be forwarded to the network device.

Using the above method, the repeater device determines the target beam in response to receiving the first message sent by the network device, and determines the beam's time domain information corresponding to the target beam, and applies the target beam within the application time determined according to the beam's time domain information. The target beam is a beam applied to the transmission link between the repeater device and the terminal device, and the target beam includes one or more beams, or one or more beam groups. In this way, the repeater device can flexibly apply the target beam according to the beam's time domain information, so as to more effectively improve the coverage performance through the target beam.

In some embodiments of the present disclosure, the above beam's time domain information may include one or more of the following information:
Information 1, beam's start time information corresponding to the target beam.

The beam's start time information can be configured to indicate first time when the repeater device starts to apply the target beam.

For example, in a case where the beam's time domain information includes the beam's start time information corresponding to the target beam, the repeater device can determine the first time according to the beam's start time information; when the current time of the repeater device reaches the first time, the target beam is applied.

The first time can be a specific time slot position or a specific symbol position in a specific time slot. It should be noted that the first time can be directly indicated by the beam's start time parameter in the message; it can also be calculated based on the slot position of the MAC CE configured to activate the target beam, and the rule for calculating the first time can be a pre-set specific rule, such as the specific rule specified by the protocol. The present disclosure is not limited to this.

Information 2, beam's end time information corresponding to the target beam.

The beam's end time information can be configured to indicate the time when the repeater device stops applying the target beam.

For example, in a case where the beam's time domain information includes the beam's end time information corresponding to the target beam, the repeater device can determine the end time according to the beam's end time information; when the current time of the repeater device reaches the end time, stop applying the target beam.

In some embodiments, the above beam's time domain information can include both beam's start time information and beam's end time information.

In some embodiments, the beam's end time is calculated based on the slot position of the MAC CE that deactivates the target beam, and the rule for calculating the end time can be a pre-set specific rule, which is not limited by the present disclosure.

In some embodiments, the beam's end time is calculated based on the beam's start time and the second duration. For example, the beam's end time can be the time obtained by adding the beam's start time to the second duration.

The second duration can be a duration carried in the MAC CE that activates the target beam. The second duration can also be a duration carried in the first message. The second duration can also be a duration pre-set by the repeater device, which is not limited by the present disclosure.

It should be noted that, in a case where the target beam is applied in a periodic manner, the second duration can also be configured to indicate the number of cycles for which the target beam is applied. For example, the second duration can indicate that the repeater device applies the target beam for a total of 100 cycles after the beam starts, and can stop applying the target beam after 100 cycles.

In this way, the repeater device can determine the first time of applying the target beam through the beam's start time information, and determine the end time of applying the target beam through the beam's end time information. In the time period between the first time and the end time, the target beam is applied, and the wireless signal is forwarded through the target beam.

Similarly, the end time can be a specific time slot position or a specific symbol position in a specific time slot.

Information 3, beam's period information corresponding to the target beam.

The beam's period information can be configured to instruct the repeater device to periodically apply the target beam.

For example, in a case where the beam's time domain information includes the beam's period information, the repeater device can determine a target period according to the beam's period information. According to the target period, the target beam is periodically applied to the repeater device.

In some embodiments, the target period can be a multiple of a time slot. For example, it can be represented by N time slots.

Information 4, beam's application duration information corresponding to the target beam.

The beam's application duration information can be configured to indicate the time length for the repeater device to apply the target beam.

In some embodiments, for a periodically applied target beam (such as a periodic beam or a semi-static beam indicated by the beam's period information), the beam's application duration information can be configured to indicate the time length for the repeater device to apply the target beam once, that is, the beam application time length of the target beam within one application occasion.

It should be noted that the target beam can be one or more beams. In a case where the target beam is one beam, the beam's application duration information can be configured to indicate the time length for the repeater device to apply the one beam.

In a case where the target beam is multiple beams, the beam's application duration information can be implemented in multiple ways, for example:
In some implementations, the beam's application duration information can include a first duration corresponding to each target beam. In this way, the repeater device can apply the target beam to the repeater device in sequence according to the first duration and the preset order.

In other implementations, the beam's application duration information can include the total duration of multiple target beams. In this way, the repeater device can determine a second duration of each target beam according to the total duration and the number of target beams; and apply the target beam to the repeater device in sequence according to the second duration and the preset order.

It should be noted that the above-mentioned preset order can be determined according to the numerical value of the beam identifier of the target beam, for example, arranged in descending order according to the beam identifier, or arranged in ascending order according to the beam identifier. The above-mentioned preset order can also be determined according to the order of the target beams in the first message, for example, arranged from front to back according to the order in which the target beams appear in the first message, or arranged from back to front. The present disclosure does not limit the sorting method of the preset order.

In some embodiments, the above-mentioned beam's application duration information may include one or more of the following information:

Beam's application duration information 1. Application time range of the target beam.

In some implementations, the application time range may include an absolute time range, for example, a range between the start time and the end time; or a continuous time range starting from the start time.

In other implementations, the application time range may include a time slot position or a symbol position, which is configured to instruct the repeater device to apply the target beam in the time slot corresponding to the time slot position or in the symbol corresponding to the symbol position.

In other implementations, the application time range may be configured to indicate a specific symbol range in a specific time slot. For example, the application time range may include a starting symbol position and an ending symbol position, which is configured to instruct the repeater device to apply the target beam between the starting symbol position and the ending symbol position of a specific time slot. For another example, the application time range may include a starting symbol position and a continuous symbol number, which is configured to instruct the repeater device to apply the target beam within the continuous symbol number starting from the starting symbol position of a specific time slot.

It should be noted that the specific time slot can be a time slot specified by the network device or each time slot.

Beam's application duration information 2: application duration for applying the target beam.

The application duration can be a multiple of a preset time unit. The preset time unit can be a millisecond, a second, a time slot, a symbol or TDRA (Time Domain Resource Allocation).

Beam's application duration information 3: TDRA (Time Domain Resource Allocation) index value for applying the target beam.

The TDRA index value can be configured to indicate the symbol position and duration (e.g., the number of continuous symbols) at which the repeater device applies the target beam in a specific time slot. The specific time slot can be a time slot specified by the network device or each time slot; or, the TDRA index value can be configured to indicate the starting time position at which the repeater device applies the target beam.

In this way, the repeater device can determine the application time of the target beam through one or more of the above beam's time domain information, and apply the target beam within the application time, so that the time domain information (such as application time information) of the target beam can be flexibly determined to improve the efficiency of beam application.

In some embodiments of the present disclosure, the beam's time domain information may include beam's start time information and/or beam's application duration information. The repeater device may apply the beam based on the beam's start time information and/or beam's application duration information in multiple ways, as illustrated below:
In some embodiments, the target beam may be applied in a periodic manner, and the above beam's start time information may include a specific time slot position. The beam's application duration information may include an application time range of the target beam within a time slot, and the application time range may be a specific symbol position, and the specific symbol position may include one or more symbols. For example, a time slot may contain 14 symbols, and the specific symbol position may represent symbol 5, and the specific symbol position may also represent multiple symbols between symbol 1 and symbol 14.

In this way, the repeater device may apply the target beam at a specific symbol position of the specific time slot position. The repeater device may also periodically apply the target beam at a specific symbol position of the target symbol starting from the specific time slot position according to the beam's period information.

In some embodiments, the target beam can be applied in a semi-static manner, and the above beam's start time information can be determined based on the MAC CE activation signaling received from the network device. The repeater device can use the Mth time slot after receiving the MAC CE activation signaling sent by the network device as the start time of the target beam, and M can be any positive integer, such as 1 or 4.

For example, the specific symbol positions in the beam's application duration information are symbol 1 to symbol 11, and the beam's period information includes a fixed period, which is 5 time slots. If the repeater device receives the MAC CE activation signaling in time slot 2, time slot 6 can be used as the start time of the target beam, and the repeater device can apply the target beam between symbol 1 and symbol 11 in time slot 6, time slot 11, time slot 16, time slot 21, time slot 26... until receiving the MAC CE deactivation signaling, and stop applying the target beam.

In other embodiments, the target beam may be applied in a dynamic manner, the beam's start time information may include a specific symbol position of a specific time slot position, and the beam's application duration information may include the application duration of the target beam (e.g., the number of continuous time slots or symbols).

In this way, the repeater device may start applying the target beam at a specific symbol position of the specific time slot position, and stop applying the target beam after the application duration.

In some implementations, the beam's start time information and the beam's application duration information may be determined based on the DCI or SCI received from the network device. For example, the DCI or SCI may indicate that the repeater device applies the target beam after A time slots. The DCI or SCI may also include a SLIV (Start and Length Indicator) identifier. The above-mentioned specific symbol position and application duration are determined by the SLIV identifier and a specific SLIV table. The specific SLIV table may be a parameter obtained by the repeater device from the RRC signaling received by the network device. The SLIV table includes the correspondence between the SLIV identifier and the specific SLIV content. The specific SLIV table may also be a table pre-agreed between the repeater device and the network device, for example, a table agreed upon by the protocol.

For example, the repeater device receives the DCI or SCI in time slot 2. The DCI or SCI may indicate that the target beam is applied after 3 time slots. The specific symbol position determined according to the SLIV identifier in the DCI or SCI is the 3rd symbol, and the application duration (duration) is 8 symbols. Then, the repeater device may apply the target beam on the 3rd to 10th symbols in time slot 5.

It should be noted that the above time slot and symbol distance are explained, the time slot can be a larger first communication time unit, and the symbol can be a smaller second communication time unit after the first communication time unit is divided. For example, the first communication time unit is divided into N second communication time units.

In some other embodiments, the beam's start time information can include absolute time information for indicating the application of the target beam, and the beam's application duration information can include the application duration of the target beam (for example, the time length in milliseconds or seconds).

In some other embodiments, the beam's time domain information can include beam's start time information, but does not include beam's application duration information. In this way, the repeater device can continue to apply the target beam according to the beam's start time until receiving an instruction to stop applying the target beam. The repeater device can also use a preset default duration as the application duration of the target beam.

In some other embodiments, in a case where the current time of the repeater device is not the application time of any target beam, the repeater device can apply a specific beam to forward wireless signals. The specific beam can be the target beam used most recently or a preset beam.

In some other embodiments, in a case where the current time of the repeater device is not the application time of any target beam, the repeater device can turn off the signal forwarding function and no longer forward any wireless signal.

In this way, the repeater device can flexibly apply the target beam according to one or more of the above-mentioned beam's time domain information to forward wireless signals.

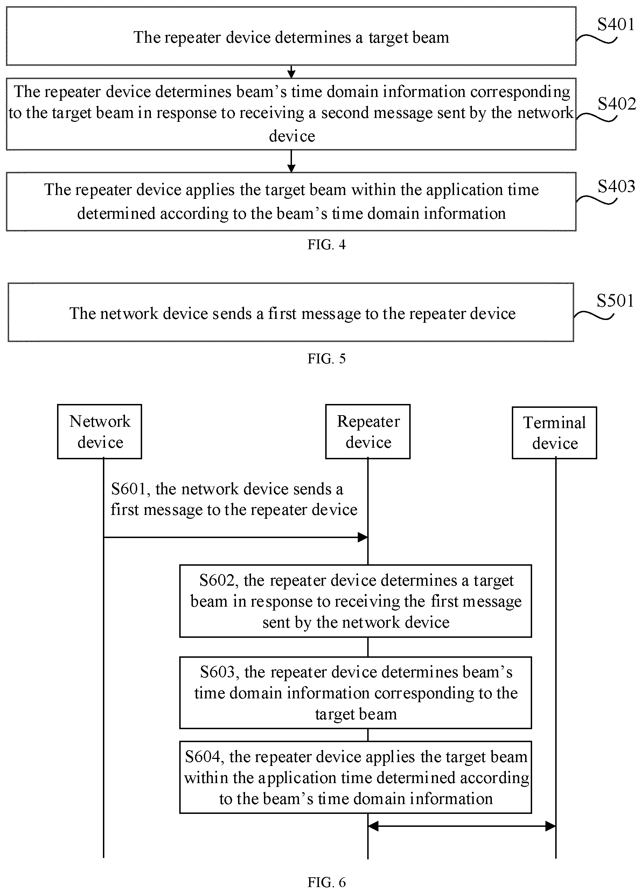

FIG. 4 is a flowchart of a beam application method shown according to an example embodiment. As shown in FIG. 4, the method may include:

S401, a repeater device determines a target beam.

For example, the repeater device may determine the target beam in response to receiving a first message sent by a network device.

S402, the repeater device determines beam's time domain information corresponding to the target beam in response to receiving a second message sent by the network device.

In some embodiments, the second message may include the beam's time domain information corresponding to the target beam. In this way, the repeater device can directly obtain the beam's time domain information, and can determine second time to start applying the target beam through the beam's time domain information.

In some other embodiments, the second time obtained by adding the time when the repeater device receives the second message to the first duration can be used as the beam's start time information corresponding to the target beam; then, the above-mentioned beam's time domain information can be determined according to the beam's start time information. The first duration can be a preset duration or a duration carried in the second message.

S403, the repeater device applies the target beam within the application time determined according to the beam's time domain information.

In some embodiments, in a case where the current time of the repeater device reaches the second time, the target beam can be applied.

In some other embodiments, in a case where the current time of the repeater device reaches the second time, the target beam can be activated, and a third message of the network device can be continuously monitored, and the target beam can be applied in response to receiving the third message sent by the network device.

The third message can include one or more of a third radio resource control RRC message, a third media access control control element MAC CE, third downlink control information DCI and third repeater control information SCI.

In this way, the repeater device can determine the beam's time domain information corresponding to the target beam according to the second message, and apply the target beam according to the beam's time domain information.

FIG. 5 is a flowchart of a beam application method according to an example embodiment. The method can be applied to the network device in the above communication system. As shown in FIG. 5, the method may include:
S501, the network device sends a first message to the repeater device.

The first message is configured to instruct the repeater device to determine the target beam and the beam's time domain information corresponding to the target beam, and apply the target beam within the application time determined according to the beam's time domain information.

In some embodiments, the target beam may be a beam applied to the transmission link between the repeater device and the terminal device.

The target beam may include one or more beams, or one or more beam groups.

In some embodiments, the first message may be a message sent by the network device through a control link.

In some embodiments, the first message may be a first radio resource control RRC message.

In some embodiments, the first message may include one or more beam identifiers, which may instruct the repeater device to determine the target beam through the beam identifiers, and the target beam includes one or more beams.

In some other embodiments, the first message may include one or more beam group identifiers, which may instruct the repeater device to determine the target beam through the beam group identifier, and the target beam includes one or more beam groups. It should be noted that a beam group may be composed of one or more beams in a preset order.

In some other embodiments, the first message may also include a beam identifier and a beam group identifier, which may instruct the repeater device to determine the target beam through the beam identifier and the beam group identifier. The target beam includes one or more beams, and one or more beam groups.

In some other embodiments, the first message may include a reference signal, which may instruct the repeater device to determine the target beam through the reference signal.

It should be noted that the first message may also include frequency domain information corresponding to the target beam, which may instruct the repeater device to determine the frequency band applied to the target beam through the frequency domain information, such as BWP (Bandwidth Part) information, CC (Carrier Component) information, etc., and the present disclosure does not limit this.

Using the above method, the network device can instruct the repeater device to determine the target beam through the first message, and determine the beam's time domain information corresponding to the target beam, and apply the target beam within the application time determined according to the beam's time domain information. The target beam is a beam applied to the transmission link between the repeater device and the terminal device, and the target beam includes one or more beams, or one or more beam groups. In this way, the target beam can be flexibly applied according to the beam's time domain information to more effectively improve the coverage performance.

In some embodiments, the above beam's time domain information includes one or more of the following information:
Information 1, beam's start time information corresponding to the target beam.

The beam's start time information can be configured to indicate first time when the repeater device starts to apply the target beam.

Information 2, beam's end time information corresponding to the target beam.

The beam's end time information can be configured to indicate the time when the repeater device stops applying the target beam.

Information 3, beam's period information corresponding to the target beam.

The beam's period information can be configured to instruct the repeater device to periodically apply the target beam.

Information 4, beam's application duration information corresponding to the target beam.

The beam's application duration information can be configured to indicate the time length for the repeater device to apply the target beam.

In other embodiments, the beam's application duration information includes one or more of the following information:
Beam's application duration information 1, application time range of applying the target beam;
Beam's application duration information 2, application duration of applying the target beam;
Beam's application duration information 3, TDRA index value of applying the target beam.

It should be noted that the specific function of the above-mentioned beam's time domain information and the way in which the repeater device applies the beam's time domain information can refer to the description in the above-mentioned embodiment of the present disclosure, which will not be repeated here.

In some embodiments of the present disclosure, the above-mentioned first message may include the beam's time domain information.

In other embodiments, the above-mentioned first message may not include the beam's time domain information, and the second message includes the beam's time domain information. The first message and the second message may be different messages.

For example, the network device may send a second message to the repeater device, and the second message includes the beam's time domain information.

The second message includes one or more of a second radio resource control RRC message, a second media access control control element MAC CE, second downlink control information DCI, and second repeater control information SCI.

In some other embodiments, the network device may also send a third message to the repeater device, and the third message is configured to instruct the repeater device to apply the target beam.

The third message may include one or more of a third radio resource control RRC message, a third media access control control element MAC CE, third downlink control information DCI, and third repeater control information SCI.

FIG. 6 is a flowchart of a beam application method according to an example embodiment. As shown in FIG. 6, the method may include:

S601, the network device sends a first message to the repeater device.

S602, the repeater device determines a target beam in response to receiving the first message sent by the network device.

S603, the repeater device determines beam's time domain information corresponding to the target beam.

S604, the repeater device applies the target beam within the application time determined according to the beam's time domain information.

It should be noted that the specific implementation of the above steps can refer to the description in the previous embodiment of the present disclosure, and will not be repeated here.

Using the above method, the network device can instruct the repeater device to determine the target beam through the first message, and determine the beam's time domain information corresponding to the target beam, and apply the target beam within the application time determined according to the beam's time domain information. The target beam is a beam applied to the transmission link between the repeater device and the terminal device, and the target beam includes one or more beams, or one or more beam groups. In this way, the target beam can be flexibly applied according to the beam's time domain information, and the coverage performance can be more effectively improved.

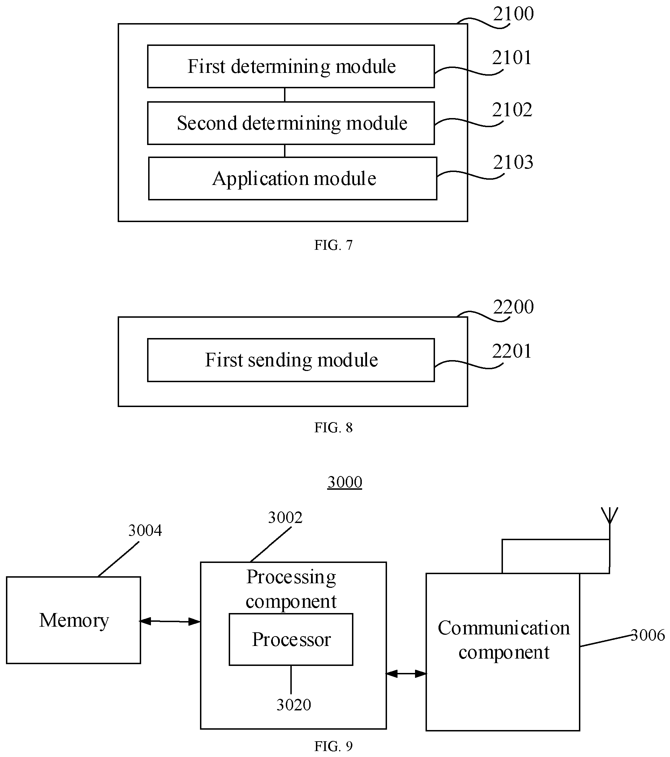

FIG. 7 is a block diagram of a beam application device 2100 according to an example embodiment. As shown in FIG. 7, the device can be applied to a repeater device, and the device 2100 may include:
a first determining module 2101 configured to determine a target beam in response to receiving a first message sent by a network device; where the target beam is a beam applied to a transmission link between the repeater device and the terminal device, and the target beam includes one or more beams, or one or more beam groups;
a second determining module 2102 configured to determine beam's time domain information corresponding to the target beam; and
an application module 2103 configured to apply the target beam within application time determined according to the beam's time domain information.

In some embodiments, the beam's time domain information includes one or more of the following information:
beam's start time information corresponding to the target beam;
beam's end time information corresponding to the target beam;
beam's application duration information corresponding to the target beam; and
beam's period information corresponding to the target beam.

In some embodiments, in a case where the beam's time domain information includes the beam's application duration information, the beam's application duration information includes one or more of the following information:
application time range for applying the target beam;
application duration for applying the target beam; and
time domain resource allocation information TDRA index value for applying the target beam.

In some embodiments, in a case where the beam's time domain information includes the beam's start time information corresponding to the target beam, the application module 2103 is configured to determine first time according to the beam's start time information; and in a case where the current time of the repeater device reaches the first time, the application module 2103 is configured to apply the target beam.

In some embodiments, in a case where the beam's time domain information includes the beam's application duration information and there are multiple target beams, the beam's application duration information includes the first duration corresponding to each target beam. The application module 2103 is configured to apply the target beam to the repeater device in sequence according to the first duration and a preset order.

In some embodiments, in a case where the beam's time domain information includes the beam's application duration information and there are multiple target beams, the beam's application duration information includes the total duration of the multiple target beams. The application module 2103 is configured to determine the second duration of each target beam according to the total duration and the number of the target beams; and the application module 2103 is configured to apply the target beams to the repeater device in sequence according to the second duration and the preset order.

In some embodiments, in a case where the beam's time domain information includes the beam's period information, the application module 2103 is configured to determine a target period according to the beam's period information; and the application module 2103 is configured to apply the target beam to the repeater device periodically according to the target period.

In some embodiments, the second determining module 2102 is configured to obtain the beam's time domain information in the first message in a case where the beam's time domain information is included in the first message.

In some embodiments, the second determining module 2102 is configured to determine the beam's time domain information according to a second message if the second message sent by the network device is received in a case where the beam's time domain information is not included in the first message.

In some embodiments, the second message includes one or more of a second radio resource control RRC message, a second media access control control element MAC CE, second downlink control information DCI, and second repeater control information SCI.

FIG. 8 is a block diagram of a beam application device 2200 according to an example embodiment. As shown in FIG. 8, the device can be applied to a network device, and the device 2200 may include:
a first sending module 2201 configured to send a first message to a repeater device; the first message is configured to instruct the repeater device to determine a target beam and beam's time domain information corresponding to the target beam, and apply the target beam within the application time determined according to the beam's time domain information; the target beam is a beam applied to the transmission link between the repeater device and the terminal device, and the target beam includes one or more beams, or one or more beam groups.

In some embodiments, the beam's time domain information includes one or more of the following information:
beam's start time information corresponding to the target beam;
beam's end time information corresponding to the target beam;
beam's application duration information corresponding to the target beam; and
beam's period information corresponding to the target beam.

In some embodiments, in a case where the beam's time domain information includes the beam's application duration information, the beam's application duration information includes one or more of the following information:
application time range for applying the target beam;
application duration for applying the target beam; and
time domain resource allocation information TDRA index value for applying the target beam.

In some embodiments, the first message includes the beam's time domain information.

In some embodiments, the first sending module 2201 is configured to send a second message to the repeater device, and the second message includes the beam's time domain information.

In some embodiments, the second message includes one or more of a second radio resource control RRC message, a second media access control control element MAC CE, second downlink control information DCI, and second repeater control information SCI. Regarding the device in the above embodiment, the specific manner in which each module performs the operation has been described in detail in the embodiment of the method, and will not be elaborated here.

FIG. 9 is a block diagram of a beam application device according to an example embodiment. The beam application device 3000 can be a terminal device in the communication system shown in FIG. 1, or a network device in the communication system.

Referring to FIG. 9, the device 3000 may include one or more of the following components: a processing component 3002, a memory 3004, and a communication component 3006.

The processing component 3002 can be configured to control the overall operation of the device 3000, such as operations associated with display, phone calls, data communications, camera operations, and recording operations. The processing component 3002 may include one or more processors 3020 to execute instructions to complete all or part of the steps of the above beam application method. In addition, the processing component 3002 may include one or more modules to facilitate the interaction between the processing component 3002 and other components. For example, the processing component 3002 may include a multimedia module to facilitate the interaction between the multimedia component and the processing component 3002.

The memory 3004 is configured to store various types of data to support the operation of the device 3000. Examples of such data include instructions for any application or method operating on the device 3000, contact data, phone book data, messages, pictures, videos, etc. The memory 3004 can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The communication component 3006 is configured to facilitate wired or wireless communication between the device 3000 and other devices. The device 3000 can access a wireless network based on a communication standard, such as Wi-Fi, 2G, 3G, 4G, 5G, 6G, NB-IOT, eMTC, etc., or a combination thereof. In an example embodiment, the communication component 3006 receives a broadcast signal or broadcast-related information from an external broadcast management system via a broadcast channel. In an example embodiment, the communication component 3006 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an example embodiment, the device 3000 can be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above-mentioned beam application method.

The above-mentioned device 3000 may be an independent electronic device or a part of an independent electronic device. For example, in one embodiment, the electronic device may be an integrated circuit (IC) or a chip, where the integrated circuit may be an IC or a collection of multiple ICs; the chip may include but is not limited to the following types: GPU (Graphics Processing Unit), CPU (Central Processing Unit), FPGA (Field Programmable Gate Array), DSP (Digital Signal Processor), ASIC (Application Specific Integrated Circuit), SOC (System on Chip, SoC), etc. The above-mentioned integrated circuit or chip may be configured to execute executable instructions (or codes) to implement the above-mentioned beam application method. The executable instructions may be stored in the integrated circuit or chip, or may be obtained from other devices or equipment, such as the integrated circuit or chip including a processor, a memory, and an interface for communicating with other devices. The executable instruction may be stored in the processor, and when the executable instruction is executed by the processor, the above-mentioned beam application method is implemented; or, the integrated circuit or chip may receive the executable instruction through the interface and transmit it to the processor for execution, so as to implement the above-mentioned beam application method.

In an example embodiment, the present disclosure also provides a computer-readable storage medium, on which computer program instructions are stored, and when the program instructions are executed by the processor, the steps of the beam application method provided by the present disclosure are implemented. For example, the computer-readable storage medium may be a non-transitory computer-readable storage medium including instructions. For example, the computer-readable storage medium may be the above-mentioned memory 3004 including instructions, and the above-mentioned instructions may be executed by the processor 3020 of the device 3000 to complete the above-mentioned beam application method. For example, the non-transitory computer-readable storage medium may be a ROM, a random access memory (RAM), a CD-ROM, a magnetic tape, a floppy disk, and an optical data storage device, etc.

In another example embodiment, a computer program product is also provided. The computer program product includes a computer program executable by a programmable device, and the computer program has a code portion for executing the above-mentioned beam application method when executed by the programmable device.

After considering the specification and practicing the present disclosure, those skilled in the art will easily think of other embodiments of the present disclosure. This application is intended to cover any modification, use or adaptation of the present disclosure, which follows the general principles of the present disclosure and includes common knowledge or customary technical means in the technical field that are not disclosed in the present disclosure. The description and examples are to be regarded as exemplary only, and the true scope and spirit of the present disclosure are indicated by the following claims.

It should be understood that the present disclosure is not limited to the precise structure described above and shown in the drawings, and various modifications and changes can be made without departing from its scope. The scope of the present disclosure is limited only by the appended claims.

## Claims

1. A beam application method, performed by a repeater device, comprising:
in response to receiving a first message sent by a network device, determining a target beam; wherein the target beam is a beam applied to a transmission link between the repeater device and a terminal device, and the target beam comprises one or more beams, or one or more beam groups;
determining beam's time domain information corresponding to the target beam; and
applying the target beam within application time determined according to the beam's time domain information.

2. The method according to claim 1, wherein the beam's time domain information comprises one or more of:
beam's start time information corresponding to the target beam;
beam's end time information corresponding to the target beam;
beam's application duration information corresponding to the target beam; and
beam's period information corresponding to the target beam.

3. The method according to claim 2, wherein in a case where the beam's time domain information comprises the beam's application duration information, the beam's application duration information comprises one or more of:
an application time range for applying the target beam;
an application duration for applying the target beam; and
a time domain resource allocation information TDRA index value for applying the target beam.

4. The method according to claim 2, wherein in a case where the beam's time domain information comprises the beam's start time information corresponding to the target beam, applying the target beam within the application time determined according to the beam's time domain information comprises:
determining first time according to the beam's start time information; and
applying the target beam when current time of the repeater device reaches the first time.

5. The method according to claim 2, wherein in a case where the beam's time domain information comprises the beam's application duration information and there are multiple target beams, the beam's application duration information comprises a first duration corresponding to each target beam; applying the target beam within the application time determined according to the beam's time domain information comprises:
applying the target beams to the repeater device in sequence according to the first duration and a preset order.

6. The method according to claim 2, wherein in a case where the beam's time domain information comprises the beam's application duration information and there are multiple target beams, the beam's application duration information comprises a total duration of the multiple target beams; applying the target beam within the application time determined according to the beam's time domain information comprises:
determining a second duration of each target beam according to the total duration and a number of the target beams; and
applying the target beams to the repeater device in sequence according to the second duration and a preset order.

7. The method according to claim 2, wherein in a case where the beam's time domain information comprises the beam's period information, applying the target beam within the application time determined according to the beam's time domain information comprises:
determining a target period according to the beam's period information; and
periodically applying the target beam to the repeater device according to the target period.

8. The method according to claim 1, wherein determining the beam's time domain information corresponding to the target beam comprises:
in a case where the first message comprises the beam's time domain information, obtaining the beam's time domain information in the first message.

9. The method according to claim 1, wherein determining the beam's time domain information corresponding to the target beam comprises:
in a case where the first message does not comprise the beam's time domain information, if receiving a second message sent by the network device, determining the beam's time domain information according to the second message.

10. The method according to claim 9, wherein the second message comprises one or more of a second radio resource control RRC message, a second media access control control element MAC CE, second downlink control information DCI, and second repeater control information SCI.

11. A communication method, performed by a network device, comprising:
sending a first message to a repeater device; wherein the first message is configured to instruct the repeater device to determine a target beam and beam's time domain information corresponding to the target beam, and apply the target beam within application time determined according to the beam's time domain information; the target beam is a beam applied to a transmission link between the repeater device and a terminal device, and the target beam comprises one or more beams, or one or more beam groups.

12. The method according to claim 11, wherein the beam's time domain information comprises one or more of:
beam's start time information corresponding to the target beam;
beam's end time information corresponding to the target beam;
beam's application duration information corresponding to the target beam; and
beam's period information corresponding to the target beam.

13. The method according to claim 12, wherein in a case where the beam's time domain information comprises the beam's application duration information, the beam's application duration information comprises one or more of:
an application time range for applying the target beam;
an application duration for applying the target beam; and
a time domain resource allocation information TDRA index value for applying the target beam.

14. The method according to claim 11, wherein the first message comprises the beam's time domain information.

15. The method according to claim 11, further comprising:
sending a second message to the repeater device, wherein the second message comprises the beam's time domain information.

16. The method according to claim 15, wherein the second message comprises one or more of a second radio resource control RRC message, a second media access control control element MAC CE, second downlink control information DCI, and second repeater control information SCI.

17. A beam application device, applied to a repeater device, comprising:
a first determining module, configured to determine a target beam in response to receiving a first message sent by a network device; wherein the target beam is a beam applied to a transmission link between the repeater device and a terminal device, and the target beam comprises one or more beams, or one or more beam groups;
a second determining module, configured to determine beam's time domain information corresponding to the target beam; and
an application module, configured to apply the target beam within application time determined according to the beam's time domain information.

18. A beam application device, applied to a network device, comprising:
a first sending module, configured to send a first message to a repeater device; wherein the first message is configured to instruct the repeater device to determine a target beam and beam's time domain information corresponding to the target beam, and apply the target beam within application time determined according to the beam's time domain information; the target beam is a beam applied to a transmission link between the repeater device and a terminal device, and the target beam comprises one or more beams, or one or more beam groups.

19. A beam application device, comprising:
a processor; and
a memory for storing processor executable instructions;
wherein the processor is configured to execute steps of the method according to any one of claims 1 to 10, or the processor is configured to execute steps of the method according to any one of claims 11 to 16.

20. A computer-readable storage medium having computer program instructions stored thereon, wherein when the computer program instructions are executed by a processor, steps of the method according to any one of claims 1 to 10 are implemented, or when the computer program instructions are executed by a processor, steps of the method according to any one of claims 11 to 16 are implemented.

21. A chip, comprising a processor and an interface; the processor is configured to read instructions to execute steps of the method according to any one of claims 1 to 10, or the processor is configured to read instructions to execute steps of the method according to any one of claims 11 to 16.
